# EUROPEAN PATENT APPLICATION

(11) **EP 3 043 451 A1**
(43) Date of publication of application: **13.07.2016**
(21) Application number: 15150283.8
(22) Date of filing: 07.01.2015
(51) Int. Cl.: H02K 5/22

(54) **Connection device**

(71) Applicant: Multi-Holding AG, 4123 Allschwil (CH)
(72) Inventor: SCHULL, Frédéric, 68210 Hagenbach (FR); NURDIN, Yannick, 68130 Walheim (FR)
(74) Representative: Frischknecht, Harry Ralph

(57) **Abstract**

A connection device (1) for providing an electrical and/or fluidic connection to an electrical device, such as a motor (2), comprising
at least one connector (3) with a connector housing (4) and at least one contact element (5), said contact element (5) having a first contact portion (6) extending along a first axis (A1), which first contact portion (6) is connectable via a plug-movement along said first axis (A1) to a connection interface (7) of the electrical device or the fluidic device (2) and a second contact portion (8) extending along a second axis (A2), which second contact portion (8) is connectable to a source, such a power source or a fluidic source, and
a support element (9) to which said connector housing (4) is connected, wherein
said first axis (A1) extends angularly tilted, preferably perpendicular, to said second axis (A2) such that the first contact portion (6) extends angularly tilted, preferably perpendicular, to the second contact portion (8).

## Description

### TECHNICAL FIELD

The present invention relates to a connection device for an electrical device such as an electrical motor according to claim 1 and a system comprising the connection device and an electrical motor according to claim 14.

### PRIOR ART

Electrical motors, in particular three phase motor, are well known from prior art. Furthermore connection systems to connect a cable to the windings of such an electrical motor are known. For example DE 10 2012 016 913 shows such a system.

However, it is a drawback that mounting such systems is rather cumbersome and takes some time. Further the space requirements of such systems usually do not match with the available space in specific situations, such as on railway bogies for example.

### SUMMARY OF THE INVENTION

It is an object of the present invention to provide a connection device which overcomes the drawbacks of the connection systems of prior art. In particular it is an object to provide a connection system that is compact and allows a quick mounting to an electrical device. Thereby the electrical device can be electrically connected to a power or signal source or fluidically connected to a fluid source such as a cooling fluid.

This object is solved by the subject matter of claim 1. Therefore a connection device for providing an electrical and/or fluidic connection to an electrical device, such as a motor, comprises at least one connector with a connector housing and at least contact element, said contact element having a first contact portion extending along a first axis, which first contact portion is connectable via a plug-movement along said first axis to a connection interface of the electrical device and a second contact portion extending along a second axis, which second contact portion is connectable to a source, such a power source or a fluidic source or a signal source, and a support element to which said connector housing is connected. Said first axis extends angularly tilted, preferably perpendicular, to said second axis such that the first contact portion extends angularly tilted, preferably perpendicular, to the second contact portion.

The connector housing can be in a mechanical connection with the support element. In an alternative embodiment the connector housing or parts of it are integrally formed with the support element. Hence the support element and the connector housing or parts of it are one single piece.

In a preferred embodiment of the invention the connectors of the connection device are provided as electrical connectors or power line connectors for said electrical motor. Said connection device comprises at least one connector with a connector housing and at least one electrical contact element providing one pole, said contact element having a first contact portion extending along a first axis, which first contact portion is connectable via a plug-movement along said first axis to a connection interface of the electrical motor and a second contact portion extending along a second axis, which second contact portion is connectable to a power source, and a support element to which said connector housing is mechanically connected. Said first axis extends angularly tilted, preferably perpendicular, to said second axis such that the first contact portion extends angularly tilted, in particular perpendicular, to the second contact portion.

Furthermore it is also possible that the connectors are signal connectors. Thereby the contact element is a signal contact element comprising at least one, preferably a plurality of poles. As the contact element of the electrical connector the contact element of signal connector comprises a first contact portion and a second contact portion.

Further it is also possible that the connectors are fluidic connectors to supply a fluid to the motor. Thereby the contact element is a fluidic contact element. The fluid can be a cooling fluid for example. The contact element of the fluidic connector comprises a first contact portion and a second contact portion.

In a preferred embodiment the electrical contact elements and the electrical signal contact elements as well as preferably also the fluidic contact elements are arranged in connection with one single support element. This configuration has the advantage that with one single movement several contacts can be established. Other configurations, such as electrical contact elements and fluidic contact elements without signal contact elements or only electrical contact elements or only signal contact elements or only fluidic contact elements are also possible.

Due to the angularly tilted arrangement of the second contact portion with regard to the first contact portion, a very compact connection device can be provided. Furthermore the accessibility of the second contact portion can be enhanced.

Preferably the connection device has a plurality of said connectors, wherein with a movement along the first axis said plurality of connectors can be connected or disconnected, respectively. Hence the plurality of connectors can be connected along said plug-movement simultaneously. The electrical device can therefore be connected in one single step to a plurality of said connectors which means that said devices can be exchanged very easily.

Preferably said contact element comprises a first contact member and a second contact member which contact members can be connected or disconnected with each other by means of a movement along said second axis. The first contact member and the second contact member are electrically or fluidly connected with each other. In other words the first contact portion is subdivided from the second contact portion due to the arrangement of said contact members. The first contact portion remains preferably fixed with the support element via the housing and the second contact portion may be removed from the support element as mentioned. Therefore it is possible to disconnect or to connect each of the second contact portions individually, for example for testing or maintenance purposes.

When the contact element is an electrical contact element the first contact member and the second contact member are electrical contact members. When the contact element is foreseen as signal line the first contact member and the second contact member can have several poles. When the contact element is a fluidic contact element the contact members are provided as tubes. At the interface between the first contact member and the second contact member it is preferable to arrange aiding means such as contact lamellas and/or sealing elements.

To summarize: In a preferred embodiment a plurality of connectors are connected/disconnected electrically and fluidically with said electrical device simultaneously and said connectors are on the other side at their second contact portion connected/disconnected individually.

In a preferred embodiment the housing comprises two housing parts, namely a first housing part and a second housing part, wherein the first contact member is arranged in the first housing part and the second contact member is arranged in the second housing part, which first housing part is in connection with the support element and which second housing part can be moved in order to connect or disconnect the contact members with each other.

Preferably the two housing parts can be secured together by means of a fastening means, such as screws or other locking elements.

The second contact portion is preferably electrically connected to a cable that is in connection with a power supply. Via the cable and the electrical contact element energy can be supplied to the motor or from the motor in case it acts as a generator.

Preferably said support element has the shape of a plate with a through opening extending along a middle axis through the support element or the plate respectively. A motor shaft can extend through the opening and the at least one connector is arranged such that the first axis extends parallel to the middle axis. Therefore the second axis along which the second contact portion extends is angularly tilted, in particular perpendicular, to the middle axis.

The middle axis of the opening is preferably collinear with the middle axis of the motor shaft.

Compared to the dimension perpendicular to the middle axis the plate has only a small extension along the middle axis. The plate is preferably a flat plate.

In a very preferred embodiment the plate is a ring and the through opening is a central through opening through the ring.

Preferably the connector extends through openings within the plate and is firmly secured to the plate.

Preferably the connector is fixed via its connector housing to the plate. In particular the connector housing extends through an opening and is fixed with a shoulder and/or a lock ring and/or a nut. The fixture between the connector housing and the opening can be such that the connector housing is arranged fixed or such that a movement around the middle axis of the opening becomes possible.

The number of connector depends largely on the number of phases. Preferably at least two or at least three connectors are arranged, which connectors are arranged at regular distances to other around the middle axis. In a preferred embodiment six connectors are arranged. The connectors can be provided for different purposes such as for signal transmission, power transmission or fluid transmission. It is possible to arrange different connectors for different purposes at the same support element.

Preferably said connector housing extends over a front surface of said plate. The front surface is the side facing an electrical motor.

Preferably the support element is connected to a bearing plate in a floating manner such that a relative displacement between said bearing plate and said support element is possible. The displacement is preferably an angular displacement or a displacement transverse to the middle axis. With such a floating bearing it is possible to enhance the connection process between the electrical motor and the connection device.

Said bearing plate comprises a mechanical connection structure so that the bearing plate is connectable to a functional device, such as a bogie of a railway vehicle, receiving a rotational force of said electrical motor.

The mechanical connection structure is preferably arranged on a side of the bearing plate that is opposite to the support element. The mechanical connection structure can comprise screws or other fastening elements.

Preferably the bearing plate also comprises a through opening through which the motor shaft can extend. Preferably the through opening in the bearing plate has the same or similar dimensions as the through opening in the support element or plate, respectively.

Preferably the support element and the bearing plate are arranged at a distance to each other so that a gap is provided between the support element, wherein said connector housing extends through that gap away from said middle axis of the through opening.

The width of the gap is preferably chosen such that the connector housing can be lead through the gap and that there is preferably sufficient play between the connector housing and the bearing plate in order to achieve said floating bearing.

Preferably at least one spring element is arranged between the support element and the bearing plate, said spring element providing a spring force from the bearing plate to the support element. Preferably at least one retaining pin connects the support element to the bearing plate, wherein at least said support element is movable along a shaft section of said retaining pin against a spring force provided by said spring element. In a preferred embodiment three or at least three retaining pins are arranged at regular distance with regard to each other in order to maintain the support element in a parallel position to the bearing plate.

The retaining pin extends preferably through the spring which is preferably a compression spring.

The retaining pin is preferably firmly connected with its end opposite to the shaft section to the bearing element. The retaining pin is preferably a screw which is screwed into a thread in the bearing element. The screw head is in contact with said support element.

Preferably the bearing plate and/or the support element comprises a sidewall bridging said gap between the bearing plate and the support element, which sidewall comprises per connector a cut-out through which parts of said connector extends.

Preferably at least one guiding element extends from said support element parallel to the first axis and/or the middle axis, which guiding element is preferably in a rigid connection with said support element. The guiding element serves as aid when the connection device will be connected to the electrical motor.

Preferably said first contact portion is a plug-side configured to receive a pin-side of the connection interface of the electrical motor and/or wherein said first contact portion is a pin-side configured to be received in a plug-side of the connection interface of the electrical motor. Said pin-side or said plug-side is mounted with a sleeve to said flange.

In a preferred embodiment the first contact portion is an opening to receive said connection interface of the motor and said second contact portion comprises a contact opening to receive an electrical cable. The connection interface of the motor is preferably a pin. Preferably a contact lamella is placed between the opening of the first contact portion and the connection interface of the motor. Said opening of the connection interface is preferably part of a first contact member and said contact opening is preferably part of a second contact member which contact members are in an electrical connection with each other. A further contact lamella is preferably placed between the first contact member and the second contact member.

Said contact members are arranged within said housing.

A system comprising a connection device according to the description above and an electrical motor, wherein the motor comprises at least one connection interface to be electrically or fluidically connected to the first contact portion. The connection interface is preferably electrically connected to the motor windings.

The connection interface can be provided to receive electrical power, signals or a fluid.

The contact element of the connector will be in an electrical contact with the connection interface of the motor. The connection interface of the electrical motor is thereby in an electrical connection with the contact element.

Preferably said electrical motor comprises a flange with a through opening through which the motor shaft extends, and wherein said connection interface is mounted to said flange, preferably in a floating manner. The connection interface is thereby slightly moveable with respect to the flange.

Depending on the shape of the first contact portion the connection interface is a pin-side or a plug-side.

Preferably the electrical motor, in particular said flange, comprises a sidewall extending around the middle axis of the motor shaft and wherein in said sidewall one cut-out per connector is arranged.

In case the connection device is connected to the motor the sidewall of the flange is preferably the outermost sidewall and the connection device is arranged at least partly within a space that is limited by the sidewall and the flange.

Preferably the electrical motor, in particular said flange, further comprises guiding element corresponding with said guiding element of the support element.

A bogie for a railway vehicle comprising a system according to the description above, wherein a connection device is in a fixed connection with the bogie, in particular via said bearing plate, and wherein an electrical contact is provided between the connection device and the electrical motor.

Due to the arrangement of the contact device the motor can be connected to the bogie in terms of its electrical connection very easily.

The connection device is preferably fixed to the bogie, in particular via said bearing plate. When mounting the electrical motor the motor is moved along the middle axis with regard to the fixed connection device. Due to this movement the contact interface of the motor will be electrically connected to the connectors of the connection device. Furthermore there is preferably a mechanical connection with the gear box or the wheels of the bogie and the motor shaft. For that reason the gear box and the motor shaft comprises an automatic mechanical coupling. The motor is preferably mated into a housing that is also part of the bogie. Further the motor is fixed to the bogie in order that the torque is compensated.

In case the motor needs to be exchanged, it is possible to move the motor along the middle axis and all connections via the connectors of said connection device will be disconnected. A new or revised motor can then be moved along said middle axis as well and all connections via the connectors of said connection device will be connected.

Furthermore it is possible during setting up a bogie or revising a bogie that each of the connectors is connected from a cable on the supply contact side by either connecting or disconnecting the second contact member from the first contact member individually along the second axis.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective view of a motor and a connection device according to one embodiment of the present invention in a dismounted state;
- Fig. 2: shows a sectional view of the arrangement of figure 1 in a mounted state;
- Fig. 3a: shows a detailed view of figure 2;
- Fig, 3b: shows a detailed view of figure 3a, wherein the second contact portion is disconnected; and
- Fig. 4: shows a further view of the arrangement of figure 1, whereby the connection device is disconnected from the motor.

### DESCRIPTION OF PREFERRED EMBODIMENTS

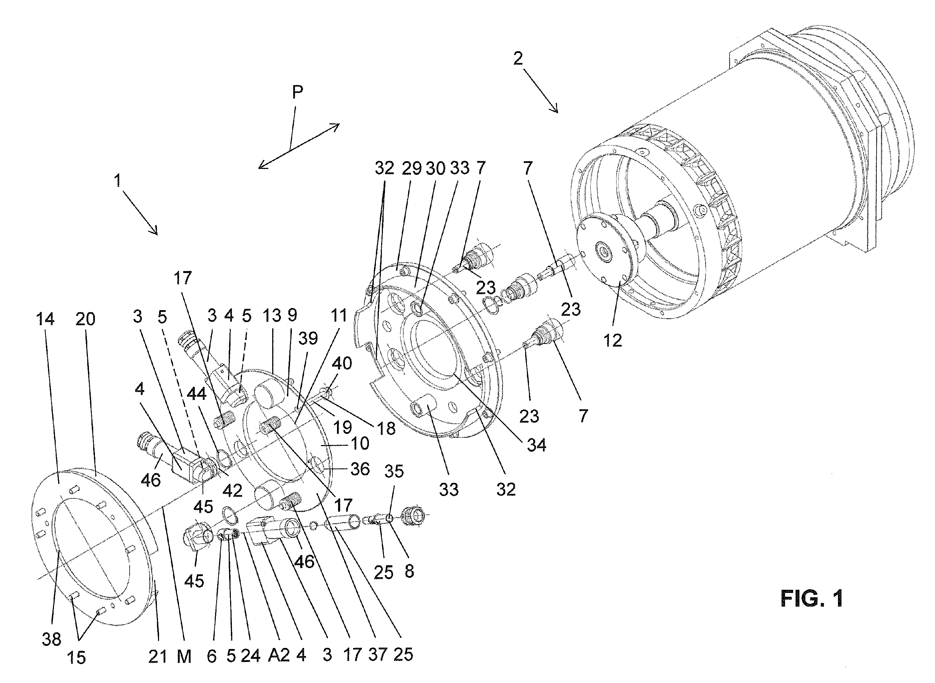

Figure 1 shows an exploded view of a connection device 1 for an electrical motor 2 and the electrical motor 2. The connection device 1 is shown to the left and the motor as well as its flange 29 is shown to the right. The connection device 1 serves to be contacted to the electrical motor 2 in an electrical sense so as to supply energy via connectors 3 to the motor 2 or to transmit energy in case the electrical motor 2 works as a generator. The connection device 1 may also serve to supply electrical signals or fluids to the electrical motor 2.

Apart from the flange 29 which works together with the connection device 1, the electrical motor 2 comprises a motor shaft 12 which is driven by the motor windings.

The connection device 1 comprises at least one connector 3 with a connector housing 4 and at least one electrical contact element 5 providing one pole. In the present embodiment three connectors 3 are provided and the motor is a three-phase electrical motor. Other configurations are also possible. The contact element 5 is arranged within the connector housing 4 and comprises a first contact portion 6 extending along the first axis A1 and a second contact portion 8 extending along a second axis A2. The first contact portion 6 is connectable via a plug-movement along said first axis A1 to a connection interface 7 of the electrical motor. Therefore the connection device 1 can be connected to the electrical motor 2 by means of this plug-movement in which there is a relative displacement between the connection device 1 and the electrical motor 2. Depending on the use of the electrical motor 2 either the contact device 1 or the electrical motor 2 are moved; or both the contact device 1 or the electrical motor 2 is moved. In the preferred embodiment the contact device 1 is in a fixed connection with a bogie and the motor 2 is moved relatively to the contact device 1 and the bogie. The plugin movement is shown by an arrow P. The second contact portion 8 is connectable to a cable, such as the cable of power source which serves to provide electrical energy to the motor. Furthermore the connection device 1 comprises a support element 9 to which the connector housing 4 is mechanically connected. The connection between the support element 9 and the connector housing 4 is preferably such that the connector housing 4 can be removed from the support element 9 for maintenance purposed. Due to the connection between the support element 9 and the connectors 3 it is possible to connect the connectors 3 at once or simultaneously to the electrical motor 2.

The connector housing 4 is made out of an electrically insulating material. Further the connector housing 4 can be made out of several pieces as it is shown in figure 1.

In case a fluidic or electrical signal connection is provided the contact element 5 is to be adapted accordingly.

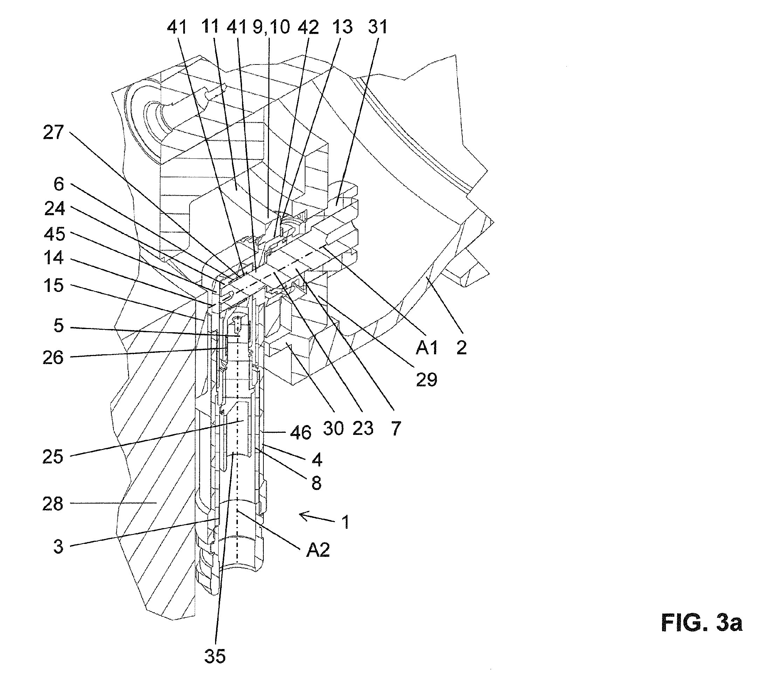

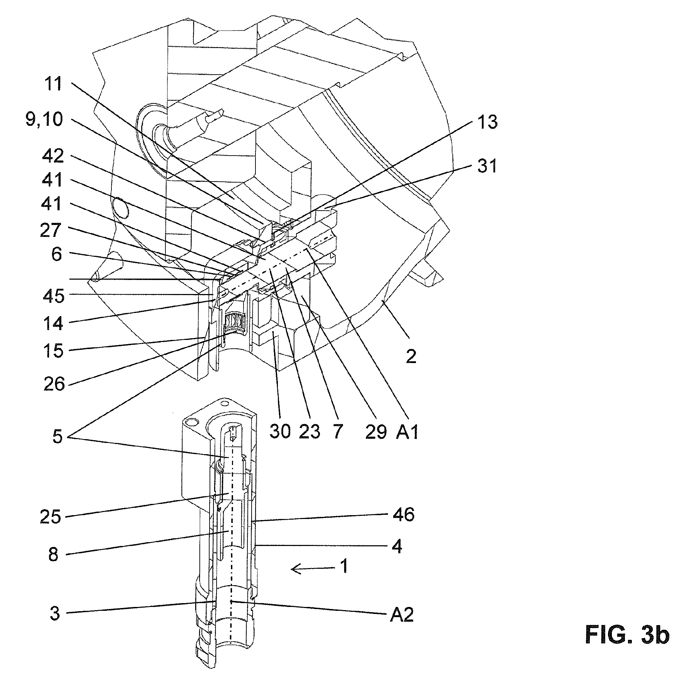

Reference is now made to figure 3a and 3b. In the embodiment shown in the figures the housing 4 comprises two housing parts, namely a first housing part 45 and a second housing part 46. In figure 3a the first housing part 45 is in connection with the second housing part 46, whereas in figure 3b the first housing part 45 and the second housing part 46 are disconnected. Furthermore the contact element 5 comprises a first contact member 24 and a second contact member 25. The first contact member 24 is arranged in the first housing part 45 and the second contact member 25 is arranged in the second housing part 46. The first and the second housing parts 45, 46 can be connected together, wherein also the first contact member 24 and the second contact member 25 will be electrically connected with each other. Between the first contact member 24 and the second contact member 25 there is a contact lamella 26 arranged. The first housing part 45 is in a fixed connection with the support plate 9 and the second housing part 46 can be connected/disconnected to the first housing part 45. It is therefore possible to connect/disconnect each of the second contact portions 8 individually. Due to the orientation it is possible to connected/disconnect the second contact portion 8 from a side that is preferably perpendicular to the motor axis.

In the present embodiment the first housing part 45 and the second housing part 46 are secured to each other with a fastening means such as a screw.

To summarize: In the present embodiment as shown in the figures it is possible to connect/disconnect the connectors 3 to the electrical motor by a movement along axis A1 simultaneously and to connect/disconnect the connectors 3 via the separation by means of the first contact member 24 and the second contact member 25 separately from each other along the second axis A2.

In the present embodiment the support element 9 comprises three openings 36 to which the connector housing 4 is connected to the support element 9. Thereby the connector housing 4 has a bearing section 42 which extends into the opening 36. The connector housing 4 is clamped by means of a stop surface 43 and a nut 44 to the support element 9. The nut 44 can also be a lock ring or any suitable device.

The first axis A1 extends angularly tilted, preferably perpendicular to said second axis A2. This means that the first contact portion 6 extends angularly tilted, in particular perpendicular to the second contact portion 8. This arrangement is advantageous as the overall thickness of the connection device 1 can be reduced significantly.

In the present embodiment the support element 9 has the shape of a plate, here the shape of a ring 10. A through opening 11 extends along a middle axis M through support element 9. This through opening has the purpose that the motor shaft 12 can extend through this opening 11. The three connectors 3 are arranged such that their first axis A1 extends parallel to the middle axis M. This means in return that the second axis A2 is arranged angularly tilted or substantially perpendicular to the middle axis M. The openings 36 which receive the connector housing 4 are arranged equally distributed around the through opening 11. This means that the angle between the openings 36 is 120°. Preferably the openings 36 are distributed at regular distance to each other around the middle axis M. This enhances the connection properties. However an uneven distribution may also be possible. The distribution depends largely on the motor configuration.

In the present embodiment the ring 10 comprises a front surface 13 and a back side 37. The front surface 13 is the side of the ring 10 facing towards the motor. The back side 37 faces away from the motor 2. The connector housing 4 extends over said front surface 13 as well as over the back side 37. The stop surface 43 is in contact with the back side 37 and the nut 44 is in contact with the front surface 13.

Furthermore the support element 9 is connected to a bearing plate 14 in a floating manner. The bearing plate 14 is also shown in figure 1. Due to its floating connection a relative displacement between said bearing plate 14 and said support element 9 is possible. With this relative displacement it is possible to compensate misalignments or tolerances between the motor 2 and the connection device 1 when the motor 2 is connected to the connection device 1.

The bearing plate 14 comprises a mechanical connection structure 15. With this mechanical connection structure 15 the bearing plate 14 is connectable to a functional device, such as a bogie 28 of a railway vehicle. The functional device thereby receives a rotational force of the motor shaft 12 of said electrical motor. In the present embodiment the bearing plate 14 comprises also a through opening 38 through which the motor shaft 12 may extend. The mechanical connection structure 15 can be an opening extending through the bearing plate 14 in order to receive a screw or any other fastening means.

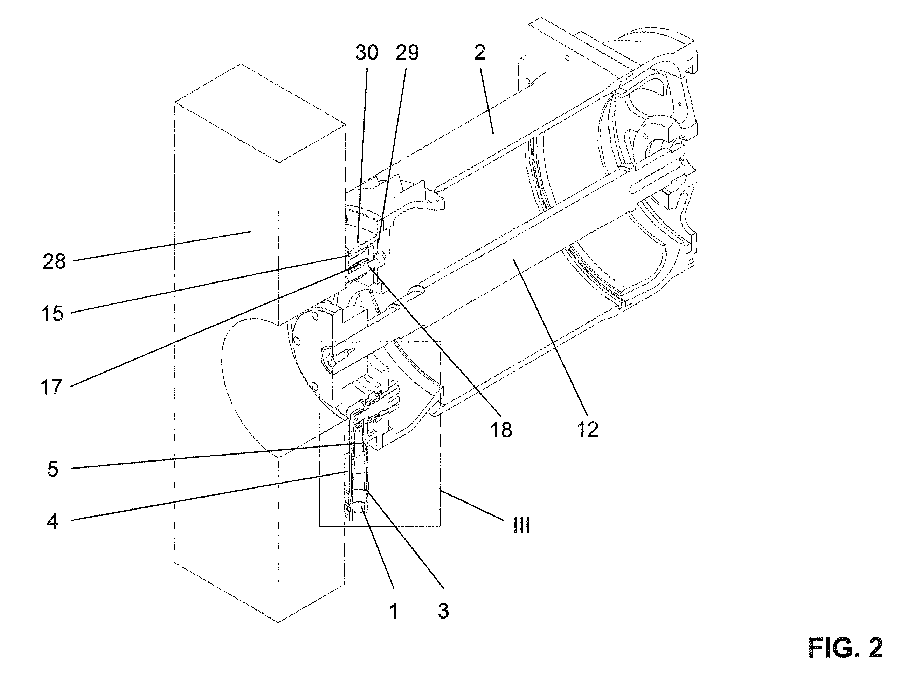

Reference is now made to figure 2 and figure 3a/3b. As it can be seen in those two figures there is a gap 16 between the bearing plate 14 and the support element 9. The support element 9 is thereby arranged at the distance with regard to the bearing plate 14. The gap 16 serves to provide a space for said connector housing 4. Said connector housing 4 extends through that gap 16 away from said middle axis M.

The gap 16 serves also to receive further parts which provide functionality between the bearing plate 14 and the support element 9. In the present case at least one spring element 17 is arranged between the support element 9 and the bearing plate 14. Said spring element 17 provides a spring force F from the bearing plate 14 to the support element 9. When the connection device 1 is connected to the motor 2 the support element 9 can be, as mentioned above, displaced with regard to the bearing plate 14. Thereby one or several of the spring elements 17 will be compressed in order to make the plate 10 tilting to be parallel to the flange 29 during the connection between bogie and motor and provide said force F against the support element 9 which will then be pressed towards the motor 2. In other words: the spring elements 17 allow relative movement of the support element 9 with regard to the bearing plate 14.

Furthermore at least one retaining pin 18 connects the support element 9 to the bearing plate 14. In the present embodiment three retaining pins 18 are arranged. The retaining pin 18 extends through a bore hole 39 in the support element 9 and is connected to the bearing plate 14. Thereby the support element 9 is moveable along a shaft section 19 of said retaining pin 18 against said spring force F provided by said spring element 17. The retaining pin 18 comprises also a head section 40 with a slightly larger in diameter than the bore hole 39. The head section 40 is contact with the front surface 13 of the support element 9 and provides therefore a stop for the support element 9 with regard to a movement away from the bearing plate 14. In the present embodiment the retaining pin 13 extends through the spring element 17, which is here provided as a pressure spring.

Preferably three pressure springs and three retaining pins are arranged and are distributed around the through opening 11 in an equal manner.

Furthermore in the present embodiment the bearing plate 14 comprises a sidewall 20 bridging the gap 16. The sidewall 20 can also be arranged at the support element 9. The sidewall 20 bridges, as said, the gap 16 between the bearing plate 14 and the support element 9. This in order to protect the elements, which are arranged between the bearing plate 14 and the support element 9. The sidewall 20 comprises one cut out 21 per connector 3. Through this cut out 21 parts of said connector 3 extends from said gap 16. This is in particularly shown in figure 2 and 3. With other words the second contact portion 8 is accessible from the outside of the connection device. Hence a cable can be easily plugged into the second contact portion 8.

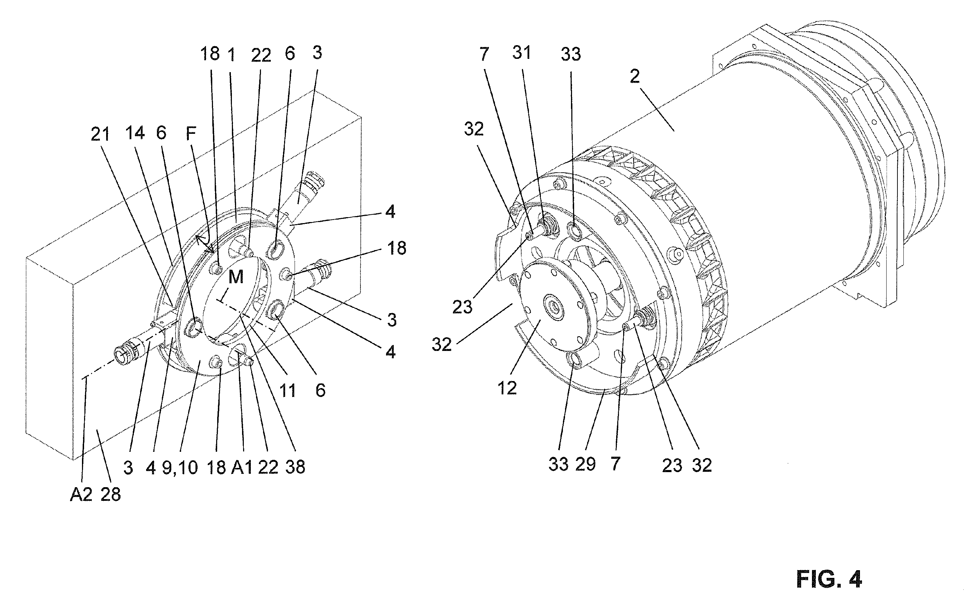

In figure 4 the connection device 1 as well as the motor 2 are shown in there mounted state. However, the connection device 1 is not in contact with the motor 2. The motor 2 can be moved relative to the connection device 1, wherein the connectors 3 will be electrically connected to the connection interface 7 of the motor 2. The motor shaft 12 then extends through the openings in the support element 9 and in the bearing plate 14 and can be mechanically connected to a further device such as a gear or a wheel.

From figure 4 it can be seen that at least one guiding element 22, here two guiding elements 22, extend from said support element 9 parallel to the first axis A1 and/or to the middle axis M. The guiding elements 22 are preferably in a rigid connection with the support element 9. The guiding elements 22 serve as guiding aid when it comes to the connection between the connection device 1 and the electrical motor 2.

The flange 29 of the motor comprises on the other hand, a guiding element 33 which serves to receive the guiding element 22 of the support element 9. In the present case the guiding element 22 of the support element 9 has the shape of a pin and the guiding element 33 of the flange 29 of the electrical motor has the shape of an opening. The pin thereby works together with the opening.

From figure 4 it can also be seen that the first contact portion 6 is a plug side and that the connection interface 7 of the electrical motor 2 is a pin side 23. The pin side 23 thereby extends into the plug side and establishes an electrical contact between the first contact portion 6 and the connection interface 9 of the electrical motor. Preferably between the plug side and the pin-side there is arranged a contact lamella which enhances the electrical contact between the pin-side and the plug-side. It may also be possible to reverse this configuration, namely to arrange a pin-side as first contact portions 6 and to provide a plug-side on the connection interface 9 of the electrical motor 2.

The second contact portion 8 comprises a contact opening 35. This can in particular be seen in figure 3. The contact opening 35 serves to receive an end portion of a cable. This means that via the contact opening an electrical contact can be established to a cable. The cable is not shown in the figures.

With regard to figure 3 the connection between the connection interface and the first contact portion 6 will now be explained in more details. The first contact portion 6 comprises an opening 27 to receive said connection interface 7 of the motor 2. The second contact portion 8 comprises a contact opening 35 to receive said electrical cable. In the present embodiment the first contact portion 6 with the opening 27 is provided by means of a first contact member 24. As mentioned above the first contact member 24 can be arranged in a first housing part 45. The contact opening 35 and the second contact portion 8 are provided by means of a second contact member 25. The second contact member 25 can be arranged in a second housing part 46. The contact members 24, 25 are in an electrical connection with each other. Between them a contact lamella 26 is arranged. When the connection interface 7 will be connected to the first contact portion 6 as it is shown in figure 3 the pin-side 23 extends into the opening 27 and an electrical connection is established between the pin-side 23 of the connection interface 7 and the first contact portion 6. Between the pin-side 23 and the opening 27 a contact lamella 41 is provided in order to enhance the electrical contact.

In a further embodiment, the contact members 24, 25 are in fluid connection with each other. In a further embodiment, the housing parts 45, 46 embed several signal lines.

The first contact member 35 with the opening 27 has to be placed angularly oriented within the housing 4. The middle axis of the opening 27 thereby provides the first axis A1.

Turning now to figure 1 further explanations are given with regard to the motor. As mentioned above the electrical motor 2 comprises a flange 29 through which the motor shaft 12 extends. The flange 29 comprises a through opening 34 to receive said motor shaft 12. The connection interface 7 of the electrical motor 2 is fitted to the flange 29. Preferably the connection interfaces 7 are also mounted in a floating manner with regard to the flange. The later enhances connection properties again. The connection interfaces 7 are on one side in connection with the first contact portion 6 of the connector 3 and on the other side in connection with the windings of the motor 2.

The connection interface 7 comprises a sleeve 31 within which said pin-side or said plug-side is arranged. The sleeve 31 is made out of an electrically insulating material.

The flange 29 comprises a sidewall 30 extending around the middle axis M of the motor shaft 12. As the sidewall 20 the sidewall 30 comprises several cut outs 32 in order to provide a space for the connecting housing 4 to extend. In the mounted stage the sidewall 30 is the outer most sidewall with regard to the sidewall 20 of the bearing plate 14. Preferably the diameter of the sidewall 30 and the diameter of the sidewall 20 is chosen such that a radial play is present between the sidewalls.

### LIST OF REFERENCE SIGNS

| | | | |
|---|---|---|---|
| 1 | connection device | 29 | flange |
| 2 | electrical motor | 30 | sidewall |
| 3 | connector | 31 | sleeve |
| 4 | connector housing | 32 | cut out |
| 5 | contact element | 33 | guiding element |
| 6 | first contact portion | 34 | through opening |
| 7 | connection interface | 35 | contact opening |
| 8 | second contact portion | 36 | opening |
| 9 | support element | 37 | back side |
| 10 | plate, ring | 38 | through opening |
| 11 | through opening | 39 | bore hole |
| 12 | motor shaft | 40 | head section |
| 13 | front surface | 41 | contact lamella |
| 14 | bearing plate | 42 | bearing section |
| 15 | mechanical connection structure | 43 | stop surface |
| | | 44 | nut |
| 16 | gap | 45 | first housing part |
| 17 | spring element | 46 | second housing part |
| 18 | retaining pin | | |
| 19 | shaft section | A1 | first axis |
| 20 | sidewall | A2 | second axis |
| 21 | cut-out | M | middle axis |
| 22 | guiding element | F | spring force |
| 23 | pin-side | P | plug-movement |
| 24 | first contact member | | |
| 25 | second contact member | | |
| 26 | contact lamella | | |
| 27 | opening | | |
| 28 | bogie | | |

## Claims

1. Connection device (1) for providing an electrical and/or fluidic connection to an electrical device, such as a motor (2), comprising
at least one connector (3) with a connector housing (4) and at least one contact element (5), said contact element (5) having a first contact portion (6) extending along a first axis (A1), which first contact portion (6) is connectable via a plug-movement along said first axis (A1) to a connection interface (7) of the electrical device (2) and a second contact portion (8) extending along a second axis (A2), which second contact portion (8) is connectable to a source, such a power source, signal source or a fluidic source, and
a support element (9) to which said connector housing (4) is connected, **characterized in that**
said first axis (A1) extends angularly tilted, preferably perpendicular, to said second axis (A2) such that the first contact portion (6) extends angularly tilted, preferably perpendicular, to the second contact portion (8).

2. Connection device according to claim 1, **characterized in that**
the contact element is an electrical contact element, wherein said electrical contact element provides one pole;
and/or **in that** the contact element is a fluidic contact element;
and/or **in that** the contact element is a signal contact element, comprising at least one pole, preferably a plurality of poles.

3. Connection device (1) according to claim 1 or 2, wherein said connection device (1) having a plurality of said connectors (3), wherein with a movement along the first axis (A1) said plurality of connectors can be connected or disconnected, respectively.

4. Connection device (1) according to one of the preceding claims, wherein said contact element (5) comprises a first contact member (24) and a second contact member (25) which contact members can be connected or disconnected with/from each other by means of a movement along said second axis (A2).

5. Connection device (1) according to claim 4, wherein said housing comprises two housing parts, namely a first housing part (45) and a second housing part (46), wherein the first contact member (24) is arranged in the first housing part (45) and the second contact member (25) is arranged in the second housing part (46), which first housing part (45) is in connection with the support element (9) and which second housing part (46) can be moved along said second axis (A2) relative to the first housing part (45) in order to connect or disconnect the contact members (24, 25) with each other.

6. Connection device (1) according to one of the preceding claims, wherein said support element (9) has the shape of a plate, in particular of a ring (10), with a through opening (11) extending along a middle axis (M) through the support element (9) wherein a motor shaft (12) can extend through the through opening (11) and wherein the at least one connector (3) is arranged such that the first axis (A1) extends parallel to the middle axis (M) wherein in particular at least two or at least three or at least six connectors (3) are arranged, which connectors (3) are arranged at regular distances to each other around the middle axis (M).

7. Connection device (1) according to one of the preceding claims, wherein said connector housing (4) extends over a front surface (13) of said plate (10) and wherein said first contact portion (6) remains preferably behind the front surface (13) and/or wherein said second axis (A2) extends perpendicular to said middle axis (M).

8. Connection device (1) according to one of the preceding claims, wherein the support element (9) is connected to a bearing plate (14) in a floating manner such that a relative displacement between said bearing plate (14) and said support element (9) is possible, wherein said bearing plate (14) comprises a mechanical connection structure (15) so that the bearing plate (14) is connectable to a functional device, such as a bogie of a railway vehicle, receiving a rotational force of said electrical motor (2).

9. Connection device (1) according to claim 8, wherein the support element (9) and the bearing plate (14) are arranged at a distance to each other so that a gap (16) is provided between the support element (9), wherein said connector housing (4) extends through that gap (16) away from said middle axis (M).

10. Connection device (1) according to claim 8 or 9, wherein at least one spring element (17) is arranged between the support element (9) and the bearing plate (14), said spring element (17) providing a spring force (F) from the bearing plate (14) to the support element (9) and wherein at least one retaining pin (18) connects the support element (9) to the bearing plate (14), wherein at least said support element (8) is movable along a shaft section (19) of said retaining pin (18) against the spring force provided by said spring element (17).

11. Connection device (1) according to one of the claims 8 to 10, wherein the bearing plate (14) and/or the support element (9) comprises a sidewall (20) bridging said gap (16) between the bearing plate (14) and the support element (9), which sidewall (20) comprises per connector (3) a cut-out (21) through which parts of said connector (3) extends.

12. Connection device (1) according to one of the preceding claims,
wherein at least one guiding element (22) extends from said support element (9) parallel to the first axis (A1) and/or the middle axis (M), which guiding element (22) is preferably in a rigid connection with said support element (9) and/or
wherein said first contact portion (6) is a plug-side configured to receive a pin-side (23) of the connection interface (9) of the electrical motor (2) and/or wherein said first contact portion (6) is a pin-side configured to be received in a plug-side of the connection interface of the electrical motor (2).

13. Connection device (1) according to one of the preceding claims, wherein the first contact portion (6) is an opening (27) to receive said connection interface (7) of the motor (2) and said second contact portion comprises a contact opening (35) to receive an electrical cable, wherein said opening (27) is preferably part of a or of said first contact member (24) and said contact opening (35) is preferably part of a or of said second contact member (25) which contact members (24, 25) are in an electrical connection with each other.

14. System comprising a connection device (1) according to one of the preceding claims and an electrical motor (2), wherein the motor (2) comprises at least one connection interface (7) to be electrically or fluidically connected to the first contact portion (6).

15. System according to claim 14, wherein said electrical motor comprises a flange (29) with a through opening (34) through which the motor shaft (12) extends, and wherein said connection interface (7) is mounted to said flange (29), preferably in a floating manner.

16. System according to claim 14 or 15,
wherein the electrical motor (2), in particular said flange (29), comprises a sidewall (30) extending around the middle axis (M) of the motor shaft (12) and wherein in said sidewall (30) one cut-out (32) per connector is arranged, and/or
wherein the electrical motor (2), in particular said flange (29) further comprises guiding element (33) corresponding with said guiding element (22) of the support element (9).

17. Bogie for a railway vehicle comprising a system according to one of the claims 14 to 16, wherein the connection device (1) is in a fixed connection with the bogie, in particular via said bearing plate and wherein an electrical contact is provided between the connection device (1) and the electrical motor (2).
